# EUROPEAN PATENT SPECIFICATION

(11) **EP 3 329 766 B1**
(45) Date of publication and mention of the grant of the patent: **11.09.2019**
(21) Application number: 17204504.9
(22) Date of filing: 29.11.2017
(51) Int. Cl.: A01G 31/02, A01G 31/06

(54) **PLANT CULTIVATION DEVICE**
PFLANZENZUCHTVORRICHTUNG
DISPOSITIF DE CULTURE DE PLANTES

(30) Priority: 30.11.2016 TW 105218332 U
(43) Date of publication of application: 06.06.2018
(73) Proprietor: Wang, Shu-Bin, Taichung (TW); Wang, Tzu-Yen, Taichung (TW)
(72) Inventor: Wang, Shu-Bin, Taichung (TW); Wang, Tzu-Yen, Taichung (TW)
(74) Representative: Lang, Christian

(56) References cited:
- EP-A1- 3 005 866
- CN-U- 202 050 769
- KR-A- 20120 094 404
- KR-A- 20160 101 455
- US-A1- 2008 115 245
- US-A1- 2012 085 026

## Description

### BACKGROUND OF THE INVENTION

### Field of the Invention

The present invention relates to a plant cultivation device.

### Description of the Prior Art

Recently, people care a lot about a quality of things around their life due to a rising of quality of life of people, especially on foods. In terms of daily necessities of vegetables and fruits, the most importance things are as follows: a complete appearance, no insects, fresh quality, non-toxic, and no pollution. It is hard to meet the requirements as above by using the traditional plant cultivation. Therefore, a method of plant cultivation called plant factory industry is developed. The plant factory cultivates plants and fruits indoor in hydroponic systems. Generally, the plant factory has multi-shelf frames disposed inside. The bottom of each layers of frame is disposed a plurality of hydroponic plates. The top of each layers of frame is disposed a plurality of LED lights (light bulbs) or fluorescent tubes (light bulbs). Put a certain number of plant seedlings into holes of the hydroponic plates, and to grow the plants with the LED lights (light bulbs) or fluorescent tubes (light bulbs) instead of sunlight. Although the plant factory can prevent the plants from damaging by a worse environment to grow the plants in a clean environment and the mature fruits and vegetables can achieve a requirement of fresh, non-toxic, and no pollution, but the plant factory still has a defect.

The quality of the water is the foundation of cultivation plant in hydroponic systems. The method of cultivation plant above can cultivate fruits and vegetables with good quality, but the water in hydroponic plates always remains at rest in general. The hydroponic plates must exchange the water more frequently to avoid a deterioration of water quality and the quality of fruits and vegetables. Thus, it is inconvenient to cultivate plant. EP3005866A1 discloses a closed aquaponics system for symbiotic breeding of aquatic species and plant species.

The present invention is, therefore, arisen to obviate or at least mitigate the above mentioned disadvantages.

### SUMMARY OF THE INVENTION

An object of the present invention is to provide a plant cultivation device, which provides with a water circulation, a water filtration, discharging the water which is for cultivating plants regularly or irregularly, and cultivating the plants in hydroponic systems and soil systems at the same time, so as to supply the clean water to the plants, produce high quality vegetables and fruits, and also provide the hydroponic systems and the soil systems at the same time, so as to increase the practicality of use.

To achieve the above and other objects, a plant cultivation device is provided, including a cultivation frame body, a plurality of hydroponic bases, a soil cultivation base, a plurality of filter bases, a water storage base and a plurality of lights, a lower half portion of the cultivation frame body having a frame, left and right sides of a top surface of the frame of an upper half portion of the cultivation frame body each having a front rod extending upwardly and an rear rod extending uprightly, a connection rod being connected to respective top portions of the rear rods, respective top portions of the front rods being connected with the rear rods on the left and right sides of the cultivation frame body, a plurality of hold bases being distanced in interval and disposed between and on the front rods, a plurality of hold bases include a first hold base, a second hold base and a third hold base, a top portion of the first hold base having a first layer hydroponic base which is hollow and has a plurality of cultivation holes on a top face, right and left ends of the first layer hydroponic base being covered, a top portion of the second hold base having a second layer hydroponic base which is hollow and has a plurality of cultivation holes on a top face, right and left ends of the second layer hydroponic base being covered, a top portion of the third hold base having a third layer hydroponic base which is hollow and has a plurality of cultivation holes on a top face, right and left ends of the third layer hydroponic base being covered, each of the hold bases corresponding to one of the lights, the soil cultivation base, the plurality of filter bases and the water storage base being arranged in a top-to-down order within the lower half portion of the frame of the cultivation frame body, the soil cultivation base having a bell syphon with a drain tube disposed thereinside, the drain tube communicated with the top filter base, the water storage base having a submersible pump and an external inlet tube which is connected with the submersible pump, the external inlet tube communicated with the first layer hydroponic base which is on the top of the cultivation frame body, a plurality of fluid guide tubes respectively communicated one another with left and right sides of the second layer hydroponic base and third layer hydroponic base, an outlet tube communicated with the third layer hydroponic base and the soil cultivation base.

Wherein, each of the hydroponic bases has a diverting and throttling valve to regulate the velocity of a fluid flow stream, a water flow rate, and a water surface height to balance a water volume.

The present invention will become more obvious from the following description when taken in connection with the accompanying drawings, which show, for purpose of illustrations only, the preferred embodiment(s) in accordance with the present invention.

### BRIEF DESCRIPTION OF THE DRAWINGS

Fig. 1 is a perspective view of a plant cultivation device according to a preferred embodiment of the present invention;
Figs. 2 and 3 are drawings showing preferable embodiment of the present invention in use;
Fig. 4 is another perspective view of a plant cultivation device according to a preferred embodiment of the present invention;
Figs. 5 and 6 are drawings showing another preferable embodiment of the present invention; and
Fig. 7 is a perspective view of a plant cultivation device according to the other preferred embodiment of the present invention.

### DETAILED DESCRIPTION OF THE PREFERRED EMBODIMENTS

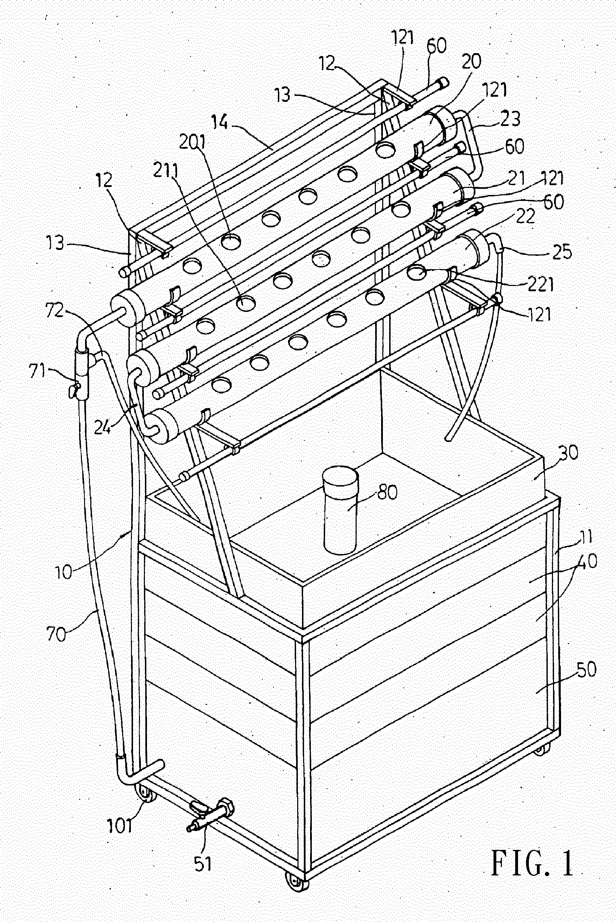

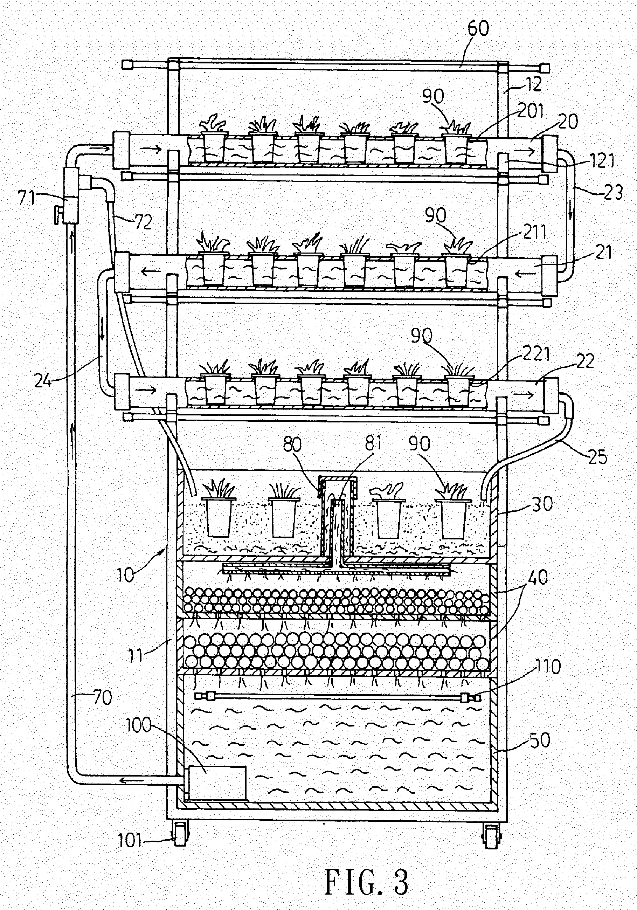

Figs. 1 to 4 show a plant cultivation device according to a preferred embodiment of the present invention. The plant cultivation device including a cultivation frame body 10, a plurality of hydroponic bases 20, a soil cultivation base 30, a plurality of filter bases 40, a water storage base 50, a plurality of lights 60, and an inlet tube 70 and a bell syphon 80.

A lower half portion of the cultivation frame body 10 has a frame 11. And left and right sides of a top surface of the frame 11 of an upper half portion of the cultivation frame body 10 each has a front rod 12 extending upwardly (such as for being transverse to a horizontal surface) and an rear rod 13 extending uprightly. A connection rod 14 are connected to respective top portions of the rear rods 13, respective top portions of the front rods 12 are connected with the rear rods 13 on the left and right sides of the cultivation frame body 10. A plurality of hold bases 121 are distanced in interval and disposed between and on the front rods 12. In this embodiment, the plurality of hold bases 121 are arranged in equal interval. The plurality of hold bases 121 include a first hold base 121, a second hold base 121 and a third hold base 121. In this embodiment, there are four hold bases 121 and three hydroponic bases 20, 21, 22; in other embodiment, the number of hydroponic bases is not limited which depends on the need. A top portion of the first hold base 121 has a first layer hydroponic base 20, which is hollow and has a plurality of cultivation holes 201 on a top face, right and left ends of the first layer hydroponic base 20 is covered. A top portion of the second hold base 121 has a second layer hydroponic base 21, which is hollow and has a plurality of cultivation holes 211 on a top face, right and left ends of the second layer hydroponic base 21 are covered. A top portion of the third hold base 121 has a third layer hydroponic base 22, which is hollow and has a plurality of cultivation holes 221 on a top face, and right and left ends of the third layer hydroponic base 22 are covered. Each of the hold bases 121 corresponding to one of the lights 60. Specifically, each of the plurality of lights 60 can be a CCFL light, LED light or other high-illuminance light. A bottom portion of the frame 11 of the cultivation frame body 10 has a plurality of wheels 101 disposed thereon. The soil cultivation base 30, the plurality of filter bases 40 and the water storage base 50 are arranged in a top-to-down order within the lower half portion of the frame 11 of the cultivation frame body 10. The soil cultivation base 30 has a bell syphon 80 with a drain tube 81 disposed thereinside, the drain tube 81 is communicated with the top filter 40. The water storage base 50 has a submersible pump 100 and an external inlet tube 70 which is connected with the submersible pump 100. The external inlet tube 70 is communicated with the first layer hydroponic base 20 which is on the top of the cultivation frame body 10. A plurality of fluid guide tubes include 23, 24. The plurality of fluid guide tubes 23, 24 are respectively communicated one another with left and right sides of the second layer hydroponic base 21 and third layer hydroponic base 22. Specifically, the fluid guide tube 23 is connected to the right side of the second layer hydroponic base 21 and third layer hydroponic base 22; the fluid guide tube 24 is connected to the left side of the second layer hydroponic base 21 and third layer hydroponic base 22. An outlet tube 25 is communicated with the third layer hydroponic base 22 and the soil cultivation base 30. Each of the hydroponic bases 20, 21, 22 has a diverting and throttling valve 26 on the bottom for adjusting a water flow rate. The diverting and throttling valve 26 is configured to be connected with a tube to communicated with the hydroponic base 20, 21, 22 or the soil cultivation base 30, so as to regulate a velocity of a fluid flow stream, the water flow rate, and the water surface height, to balance a water volume in the hydroponic base 20, 21, 22 to prevent the water from overflowing. Besides, the water storage base 50 has an ultraviolet light (or an anti-virus light) 110 disposed thereinside. A top portion of the inlet tube 70 has a control valve 71 and an overflow tube 72 communicated with the control valve 71 and the soil cultivation base 30. Moreover, one side of the water storage base 50 has a discharge opening 51 which has a control valve.

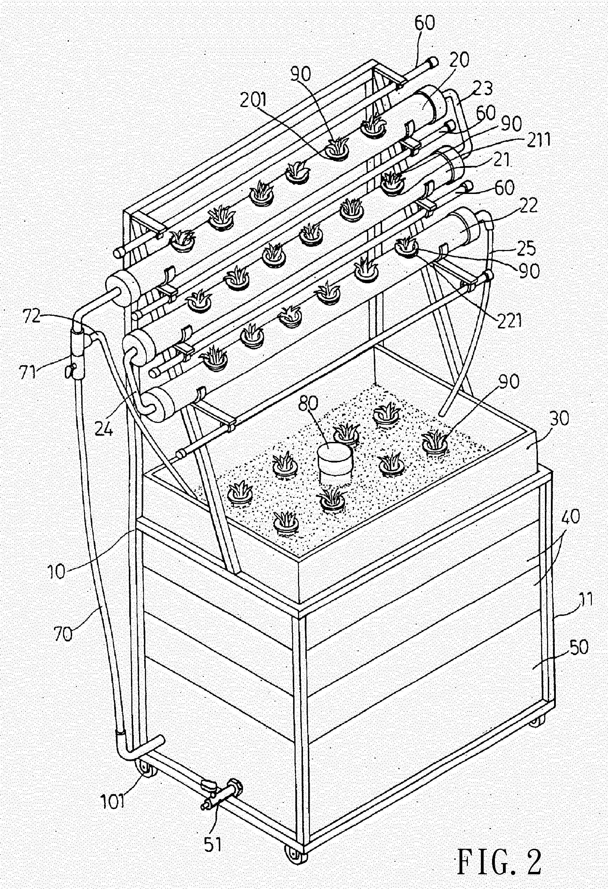

Please refer to Figs. 2 to 3 shown as a drawing of an embodiment of present invention. Each plants 90 is planted into each of cultivation holes 201 of the first layer hydroponic base 20, each cultivation holed 211 of the second layer hydroponic base 21, and each cultivation holed 221 of the third layer hydroponic base 22. The plants 90 in each hydroponic bases 20, 21, 22 are disposed under the light 60 which is disposed on the upper hydroponic bases 20, 21 or 22. Besides, plant the plants in the soil cultivation base 30 which is filled in the cultivatable soil (or medium soil, or other soil mixed with multiple gravel layers). The light 60 which is disposed on the lower hydroponic base 22, is upon the plants 80 which are planted in the soil cultivation base 30. Moreover, the first filter base 40 can be disposed deodorant balls inside, and the second layer filter base 40 can be disposed biochemical drugs inside.

In use, fill sufficient water into the water storage base 50, drive the submersible pump 100 to extract water from the water storage base 50 to the first layer hydroponic base 20, then the water will flow into the fluid guide tube 23, the second layer hydroponic base 21, the fluid guide tube 24, and the third layer hydroponic base 22 in order. The outlet tube 25 drains out the water from the third layer hydroponic base 22 to the soil cultivation base 30. The bell syphon 80 uses the siphon effect to discharge excessive water to the filter bases 40, and the filter bases 40 filter the water to the water storage base 50, meanwhile the ultraviolet light 110 kills bacteria which is in the water. Besides, the overflow tube 72 can discharge the excessive water to the soil cultivation base 30 when excessive water flow into the filter 40 from inlet tube 70 at first, so as to avoid overflowing. Therefore, the circulation of water can provide the hydroponic systems and the soil systems to use, and mix nutrients that is added in the water to maintain the quality of water, and the discharge opening 51 which is disposed on the water storage base 50 can discharge the water.

Therefore, the present invention provides a water circulation system for cultivating plants in the hydroponic systems and the soil systems, and the lights of which are disposed on each hydroponic bases 20, 21, 22 can provide sufficient light for hydroponic plants and soil plants to perform photosynthesis by. The discharge opening 51 of the control valve can discharge the metamorphic water out the water storage base 50 which is formed after several cycles of planting.

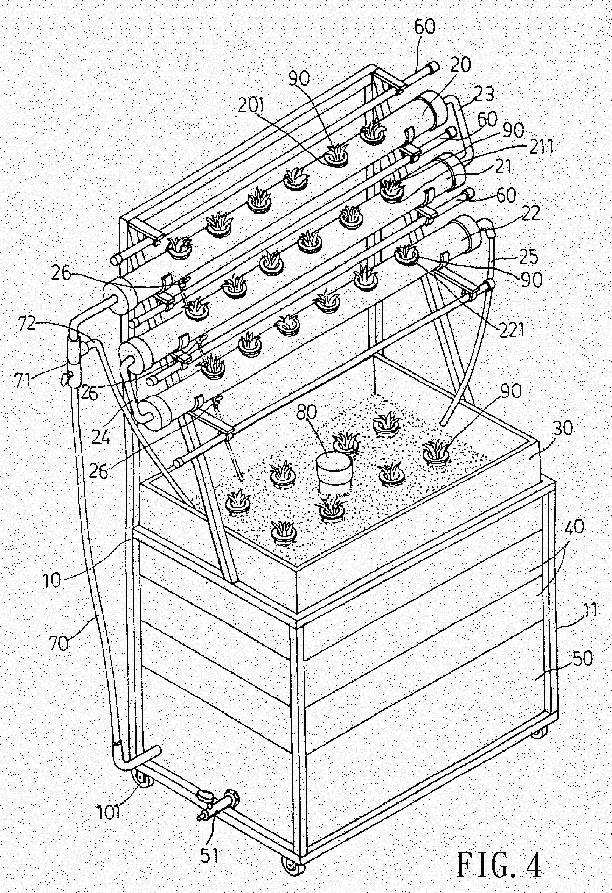

Please refer to Fig. 4 shown as a drawing of the embodiment of the present invention. Specially, a bottom of each of the hydroponic bases 20, 21, 22 has a diverting and throttling valve 26 for adjusting the water flow rate. The diverting throttling valve 26 is configured to be connected with a tube to guide fluid flow one another into each of the hydroponic bases 20, 21, 22 or directly flow into the soil cultivation 30, so as to regulate the velocity of the fluid flow stream, the water flow rate, and a water surface height to balance the water volume in the hydroponic bases 20, 21, 22.

The arrangement of the soil cultivation base 30, the plurality of filter bases 40 and the water storage base 50 is not only can disposed within the bottom portion of frame 11 of the cultivation frame body 10, but can be assembled separately the cultivation frame body 10 and can also communicated with the hydroponic bases 20, 21, 22. However, the connection of the inlet tube 70, the outlet tube 25 and the overflow tube 72 remains the same.

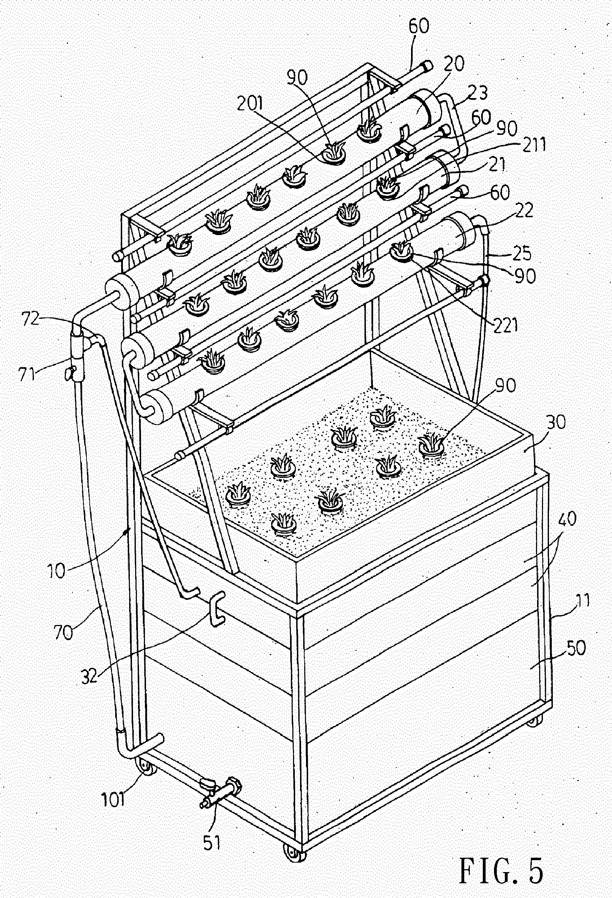

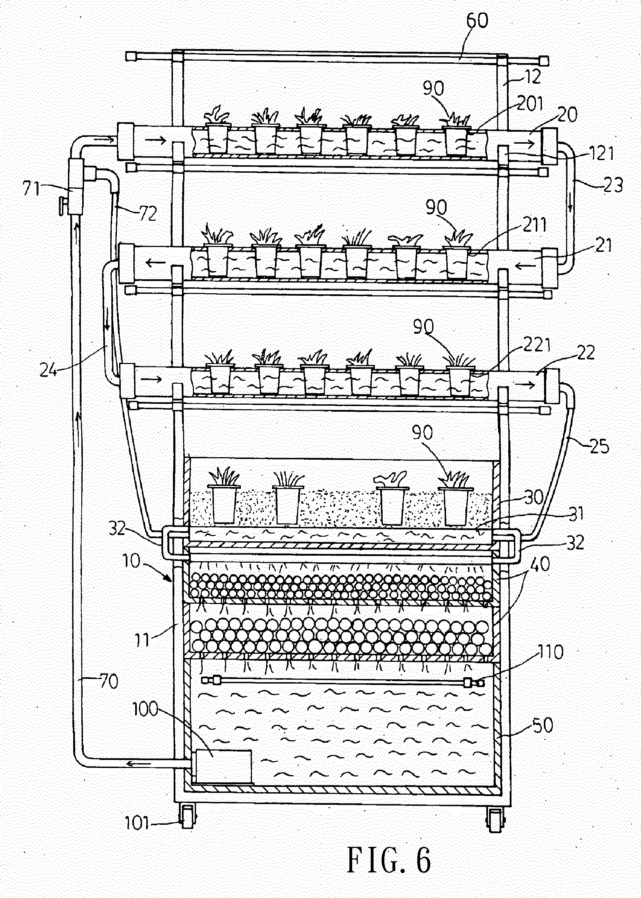

Please refer to Figs. 5 to 6, the soil cultivation base 30 can be disposed a small mesh net 31 instead of the bell syphon 80 between the cultivate soil and a bottom water layer to block the cultivate soil into the bottom water layer. At least one guide tube 32 is communicated with a top portion of the small mesh net 31 and the top filter base 40. Besides, the overflow tube 72 and the outlet tube 25 of the third layer hydroponic base 22 both are connected with the bottom water layer of the soil cultivation base 30.

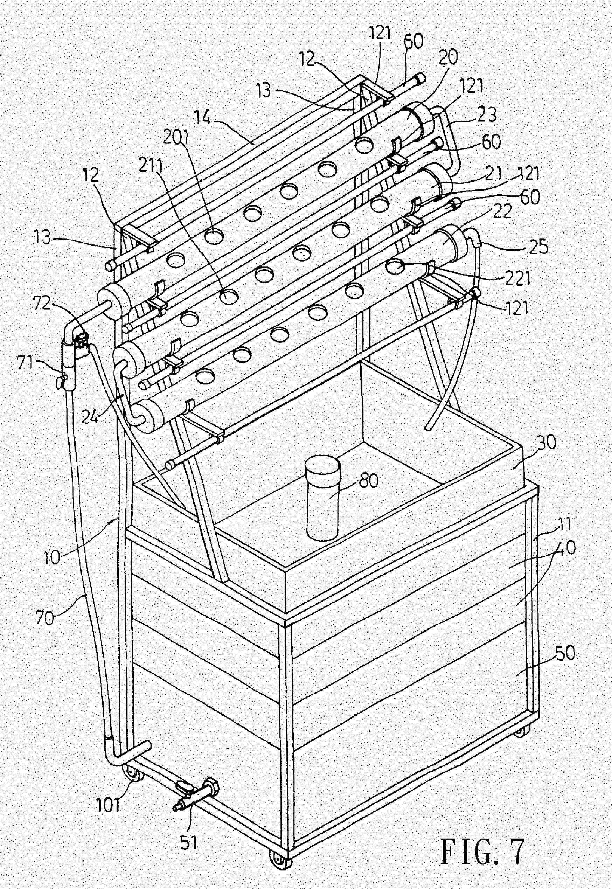

Please refer to Fig. 7, the overflow tube 72 has a control valve to adjust the water flow rate and the water volume of the soil cultivation base 30.

Although particular embodiments of the invention have been described in detail for purposes of illustration, various modifications and enhancements may be made without departing from the scope of the invention. Accordingly, the scope of protection of the invention is limited by the combination of features of the appended claims.

## Claims

1. A plant cultivation device, including a cultivation frame body (10), a plurality of hydroponic bases (20), a soil cultivation base (30), a plurality of filter bases (40), a water storage base (50) and a plurality of lights (60), a lower half portion of the cultivation frame body (10) having a frame (11), left and right sides of a top surface of the frame (11) of an upper half portion of the cultivation frame body (10) each having a front rod (12) extending upwardly and a rear rod (13) extending uprightly, a connection rod (14) being connected to respective top portions of the rear rods (13), respective top portions of the front rods (12) being connected with the rear rods (13) on the left and right sides of the cultivation frame body (10), a plurality of hold bases (121) being distanced in interval and disposed between and on the front rods (12), a plurality of hold bases (121) include a first hold base (121), a second hold base (121) and a third hold base (121), a top portion of a first hold base (121) having a first layer hydroponic base (20) which is hollow and has a plurality of cultivation holes (201) on a top face, right and left ends of the first layer hydroponic base (20) being covered, a top portion of the second hold base (121) having a second layer hydroponic base (21) which is hollow and has a plurality of cultivation holes (211) on a top face, right and left ends of the second layer hydroponic base (21) being covered, a top portion of the third hold base (121) having a third layer hydroponic base (22) which is hollow and has a plurality of cultivation holes (221) on a top face, right and left ends of the third layer hydroponic base (22) being covered, each of the hold bases (121) corresponding to one of the lights (60), the soil cultivation base (30), the plurality of filter bases (40) and the water storage base (50) being arranged in a top-to-down order within the lower half portion of the frame (11) of the cultivation frame body (10), the soil cultivation base (30) having a bell syphon (80) with a drain tube (81) disposed thereinside, the drain tube (81) communicated with the top filter base (40), the water storage base (50) having a submersible pump (100) and an external inlet tube (70) which is connected with the submersible pump (100), the external inlet tube (70) communicated with the first layer hydroponic base (20) which is on the top of the cultivation frame body (10), a plurality of fluid guide tubes (23, 24) respectively communicated one another with left and right sides of the second layer hydroponic base (21) and third layer hydroponic base (22), an outlet tube (25) communicated with the third layer hydroponic base (22) and the soil cultivation base (30).

2. The plant cultivation device of claim 1, wherein a top end of the inlet tube (70) has a control valve (71) and an overflow tube (72) communicated with the control valve (71) and the soil cultivation base (30).

3. The plant cultivation device of claim 1, wherein the water storage base (50) has an ultraviolet light (110) disposed thereinside.

4. The plant cultivation device of claim 1, wherein a bottom portion of the cultivation frame body (10) has a plurality of wheels (101) disposed thereon.

5. The plant cultivation device of claim 1, wherein the water storage base (50) has a discharge opening (51) which has a control valve.

6. The plant cultivation device of claim 1, wherein each of the hydroponic bases (20) has a diverting and throttling valve (26) for adjusting a water flow rate, the diverting and throttling valve (26) is configured to be connected with a tube to be communicated with the hydroponic base (20) or the soil cultivation base (30).

## Patentansprüche

1. Pflanzenzuchtvorrichtung, welche einen Kultivierungsrahmenkörper (10), eine Vielzahl von hydroponischen Basen (20), eine Erdanbaubasis (30), eine Vielzahl von Filterbasen (40), eine Wasserspeicherbasis (50) and eine Vielzahl von Leuchten (60) umfasst, wobei ein unterer Hälftenabschnitt des Kultivierungsrahmenkörpers (10) einen Rahmen (11) aufweist, wobei eine linke und eine rechte Seite einer Oberseite des Rahmens (11) eines oberen Hälftenabschnitts des Kultivierungsrahmenkörpers (10) jeweils eine vordere Stange (12), welche sich nach oben erstreckt, und eine hintere Stange (13) aufweist, welche sich aufrecht erstreckt, wobei eine Verbindungsstange (14) mit den jeweiligen oberen Abschnitten der hinteren Stangen (13) verbunden ist, wobei die oberen Abschnitte der vorderen Stangen (12) entsprechend mit den hinteren Stangen (13) an der linken und der rechten Seite des Kultivierungsrahmenkörpers (10) verbunden sind, wobei eine Vielzahl von Haltebasen (121) vorgesehen ist, welche durch Abstände voneinander beabstandet sind und zwischen und an den vorderen Stangen (12) angeordnet sind, wobei die Vielzahl von Haltebasen (121) eine erste Haltebasis (121), eine zweite Haltebasis (121) und eine dritte Haltebasis (121) beinhaltet, wobei ein oberer Abschnitt einer ersten Haltebasis (121) eine erste hydroponische Basisschicht (20) aufweist, welche hohl ist und eine Vielzahl von Kultivierungsöffnungen (201) an einer oberen Fläche hat, wobei das rechte und das linke Ende der ersten hydroponischen Basisschicht (20) abgedeckt sind, wobei ein oberer Abschnitt der zweiten Haltebasis (121) eine zweite hydroponische Basisschicht (21) aufweist, welche hohl ist und eine Vielzahl von Kultivierungsöffnungen (211) an einer oberen Fläche hat, wobei das rechte und das linke Ende der zweiten hydroponischen Basisschicht (21) abgedeckt sind, wobei ein oberer Abschnitt der dritten Haltebasis (121) eine dritte hydroponische Basisschicht (22) aufweist, welche hohl ist und eine Vielzahl von Kultivierungsöffnungen (221) an einer oberen Fläche hat, wobei das rechte und das linke Ende der dritten hydroponischen Basisschicht (22) abgedeckt sind, wobei jede der Haltebasen (121) mit einer der Leuchten (60) korrespondiert, wobei die Erdanbaubasis (30), die Vielzahl von Filterbasen (40) und die Wasserspeicherbasis (50) in einer von oben nach unten gehenden Anordnung innerhalb des unteren Hälftenabschnitts des Rahmens (11) des Kultivierungsrahmenkörpers (10) angeordnet sind, wobei die Erdanbaubasis (30) einen Glockensiphon (80) mit einem darin angeordneten Abflussrohr (81) aufweist, wobei das Abflussrohr (81) mit der oberen Filterbasis (40) in Verbindung steht, wobei die Wasserspeicherbasis (50) eine Tauchpumpe (100) und ein außenliegendes Einlassrohr (70) aufweist, welches mit der Tauchpumpe (100) verbunden ist, wobei das außenliegende Einlassrohr (70) mit der ersten hydroponischen Basisschicht (20) in Verbindung steht, welche sich am Kopfende des Kultivierungsrahmenkörpers (10) befindet, wobei eine Vielzahl von Fluidführungsrohren (23, 24) jeweils gegenseitig mit den linken und rechten Seiten der zweiten hydroponischen Basisschicht (21) und dritten hydroponischen Basisschicht (22) in Verbindung steht, wobei ein Auslassrohr (25) mit der dritten hydroponischen Basisschicht (22) und der Erdanbaubasis (30) in Verbindung steht.

2. Pflanzenzuchtvorrichtung nach Anspruch 1, bei welcher ein oberes Ende des Einlassrohrs (70) ein Regelventil (71) und ein Überlaufrohr (72) aufweist, das mit dem Regelventil (71) und der Erdanbaubasis (30) in Verbindung steht.

3. Pflanzenzuchtvorrichtung nach Anspruch 1, bei welcher die Wasserspeicherbasis (50) ein ultraviolettes Licht (110) aufweist, welches in deren Innerem angeordnet ist.

4. Pflanzenzuchtvorrichtung nach Anspruch 1, bei welcher ein Bodenabschnitt des Kultivierungsrahmenkörpers (10) eine Vielzahl von Rädern (101) aufweist, die daran angeordnet sind.

5. Pflanzenzuchtvorrichtung nach Anspruch 1, bei welcher die Wasserspeicherbasis (50) eine Austrittsöffnung (51) hat, die ein Regelventil aufweist.

6. Pflanzenzuchtvorrichtung nach Anspruch 1, bei welcher jede der hydroponischen Basen (20) ein Verteil- und Drosselventil (26) zur Anpassung einer Wasserdurchflussmenge aufweist, wobei das Verteil- und Drosselventil (26) zur Verbindung mit einem Rohr konfiguriert ist, das zur Verbindung mit der hydroponischen Basis (20) oder der Erdanbaubasis (30) dient.

## Revendications

1. Dispositif de culture de plante, incluant un corps de cadre de culture (10), une pluralité de bases hydroponiques (20), une base de culture de sol (30), une pluralité de bases de filtre (40), une base de stockage d'eau (50) et une pluralité de lumières (60), une demie portion inférieure du corps de cadre de culture (10) présentant un cadre (11), des côtés gauche et droit d'une surface supérieure du cadre (11) d'une demie portion supérieure du corps de cadre de culture (10) présentant chacun une tige avant (12) s'étendant vers le haut et une tige arrière (13) s'étendant verticalement, une tige de raccordement (14) étant raccordée aux portions supérieures respectives des tiges arrière (13), des portions supérieures respectives des tiges avant (12) étant raccordées aux tiges arrière (13) sur les côté gauche et droit du corps de cadre de culture (10), une pluralité de bases de maintien (121) étant à distance à intervalle et disposée entre et sur les tiges avant (12), une pluralité de bases de maintien (121) inclut une première base de maintien (121), une deuxième base de maintien (121) et une troisième base de maintien (121), une portion supérieure d'une première base de maintien (121) présentant une première base hydroponique à couche (20) qui est creuse et présente une pluralité de trous de culture (201) sur une face supérieure, des extrémités droite et gauche de la première base hydroponique à couche (20) étant couvertes, une portion supérieure de la seconde base de maintien (121) présentant une seconde base hydroponique à couche (21) qui est creuse et présente une pluralité de trous de culture (211) sur une face supérieure, des extrémités droite et gauche de la seconde base hydroponique à couche (21) étant couvertes, une portion supérieure de la troisième base de maintien (121) présentant une troisième base hydroponique à couche (22) qui est creuse et présente une pluralité de trous de culture (221) sur une face supérieure, des extrémités droite et gauche de la troisième base hydroponique à couche (22) étant couvertes, chacune des bases de maintien (121) correspondant à une des lumières (60), la base de culture de sol (30), la pluralité de bases de filtre (40) et la base de stockage d'eau (50) étant agencées dans un ordre de haut en bas dans la demie portion inférieure du cadre (11) du corps de cadre de culture (10), la base de culture de sol (30) présentant un siphon en cloche (80) avec un tube de drainage (81) disposé à l'intérieur de celui-ci, le tube de drainage (81) étant en communication avec la base de filtre supérieur (40), la base de stockage d'eau (50) présentant une pompe submersible (100) et un tube d'entrée externe (70) qui est raccordé à la pompe submersible (100), le tube d'entrée externe (70) étant en communication avec la première base hydroponique à couche (20) qui est sur le dessus du corps de cadre de culture (10), une pluralité de tubes de guidage de fluide (23, 24) étant en communication respectivement les uns les autres avec des côtés gauche et droit de la deuxième base hydroponique à couche (21) et la troisième base hydroponique à couche (22), un tube de sortie (25) étant en communication avec la troisième base hydroponique à couche (22) et la base de culture de sol (30).

2. Dispositif de culture de plante selon la revendication 1, dans lequel une extrémité supérieure du tube d'entrée (70) présente une valve de commande (71) et un tube de débordement (72) en communication avec la valve de commande (71) et la base de culture de sol (30).

3. Dispositif de culture de plante selon la revendication 1, dans lequel la base de stockage d'eau (50) présente une lumière ultraviolette (110) disposée à l'intérieur de celle-ci.

4. Dispositif de culture de plante selon la revendication 1, dans lequel une portion inférieure du corps de cadre de culture (10) présente une pluralité de roues (101) disposées sur celle-ci.

5. Dispositif de culture de plante selon la revendication 1, dans lequel la base de stockage d'eau (50) présente une ouverture d'évacuation (51) qui présente une valve de commande.

6. Dispositif de culture de plante selon la revendication 1, dans lequel chacune des bases hydroponiques (20) présente une valve de déviation et d'étranglement (26) pour l'ajustement d'un débit d'eau, la valve de déviation et d'étranglement (26) est configurée pour être raccordée à un tube à mettre en communication avec la base hydroponique (20), ou la base de culture de sol (30).
